# DEMANDE DE BREVET EUROPEEN

(11) **EP 1 067 610 A1**
(43) Date de publication de la demande: **10.01.2001**
(21) Numéro de dépôt: 00401830.5
(22) Date de dépôt: 27.06.2000
(51) Int. Cl.: H01M 2/04, H01M 2/34, H01M 2/06, H01M 10/04

(54) **Accumulateur électrochimique étanche comportant un dispositif de reprise de courant en aluminium**

(30) Priorité: 08.07.1999 FR 9908847
(71) Demandeur: ALCATEL, 75008 Paris (FR)
(72) Inventeur: Souliac, Laurent, 33110 Le Bouscat (FR); Fradin, Jean, 86240 Fontaine le Comte (FR); Rigobert, Gérard, 33370 Fargues St. Hilaire (FR)
(74) Mandataire: Doressamy, Clarisse

(57) **Abrégé**

Accumulateur électrochimique (1, 1') étanche de grande capacité, cylindrique, comprenant une extrémité (2, 2', 2", 2"') de sortie de courant comprenant de l'aluminium, ledit accumulateur (1, 1') étant caractérisé en ce que :
- ladite extrémité (2, 2', 2", 2''') comprend un couvercle (8, 8', 8", 8''') en aluminium, susceptible d'être mis en contact avec une pièce de connexion électrique (3) extérieure, par un moyen de serrage (15, 15', 15", 15"'), situé au moins en partie sous le couvercle (8, 8', 8", 8"') et coopérant avec un moyen extérieur d'assemblage (4, 4', 33), ledit moyen de serrage (15, 15', 15", 15"') étant en matériau choisi parmi les aciers inoxydables, les aciers nickelés, le cuivre et le laiton, et
- l'étanchéité dudit accumulateur (1, 1') au niveau du couvercle (8, 8', 8", 8"') étant assurée par un opercule métallique d'étanchéité (14, 14', 14"), situé sous le couvercle (8, 8', 8", 8"').

## Description

La présente invention concerne un accumulateur électrochimique étanche de capacité supérieure à 10 Ah comportant une enveloppe pratiquement cylindrique, un faisceau électrochimique, deux extrémités opposées assurant chacune la sortie de courant de polarité opposée, au moins l'une des extrémités comprenant de l'aluminium. Cet accumulateur est notamment utilisé pour l'alimentation des véhicules électriques ou hybrides, typiquement avec une capacité de 30 à 50 Ah. L'invention concerne plus particulièrement les accumulateurs électrochimiques étanches de couple électrochimique fonctionnant en présence d'un électrolyte non-aqueux tel que le couple lithium-ion.

Les accumulateurs électrochimiques lithium-ion étanches de fortes capacités utilisés dans l'industrie automobile en propulsion principale ou d'appoint de véhicules électriques ont le plus souvent une enveloppe en acier inoxydable ou en acier nickelé, et une borne assurant la reprise de courant de l'extrémité positive en aluminium pur.

Un des avantages de l'utilisation de l'aluminium est sa faible masse volumique, qui permet d'augmenter la capacité massique de l'accumulateur dont il constitue le matériau d'un couvercle et/ou de l'enveloppe. Par contre, l'utilisation de l'aluminium pur pose le problème d'une résistance mécanique plus faible du matériau par rapport à de l'acier nickelé ou de l'acier inoxydable. C'est pourquoi, dans le cas où le couvercle de l'extrémité positive de l'accumulateur est en aluminium, il est difficile de réaliser un système de fixation d'une barrette de connexion extérieure à l'accumulateur compact, fiable et stable dans le temps qui ne doit pas en vieillissant générer une trop grande résistance électrique. Et ceci est d'autant plus vrai que l'accumulateur est de forte capacité et donc qu'il faut que les connexions soient épaisses, de façon à supporter le passage de fortes intensités de courants. En effet le vissage dans le matériau qu'est l'aluminium, pour être efficace et stable dans le temps, nécessite l'utilisation d'un filetage occupant un volume relativement important pour avoir une bonne prise dans le matériau. Mais alors le gain de l'utilisation de l'aluminium, en termes de capacité volumique, est annulé à cause du volume qu'occupe la connexion. Ce qui fait que le gain en capacité volumique est réduit malgré le gain en capacité massique.

Ainsi la demande de brevet européen EP-A2-0.771.040 décrit un accumulateur électrochimique étanche cylindrique, dont l'enveloppe est en acier inoxydable, pouvant être utilisé pour l'alimentation de véhicules électriques, ledit accumulateur comprenant un faisceau électrochimique. Pour le cas où il se produirait un dysfonctionnement, le couvercle en acier qui comprend une borne en aluminium peut comprendre un système d'évacuation des gaz interne à l'accumulateur qui est une soupape de sécurité disposée de façon excentrée sur le couvercle. Ledit couvercle comporte aussi un orifice d'admission d'électrolyte, excentré et symétrique par rapport à ladite soupape. Un tel accumulateur présente des inconvénients. D'une part le positionnement de cette soupape de sécurité implique que, lors de la mise en place d'une barrette de connexion par exemple pour une utilisation en alimentation de véhicule électrique ou hybride, le positionnement de ladite barrette doit être tel qu'elle ne gêne pas le fonctionnement de ladite soupape. D'autre part, le volume de la borne ou extrémité positive est très important, car l'aluminium ultrapur est un matériau particulièrement mou, ce qui représente une perte inacceptable en terme de capacité massique et volumique dudit l'accumulateur. Enfin le fait que l'enveloppe soit en acier et la borne positive en aluminium oblige à isoler ces deux pièces électrochimiquement par un joint, ce qui présente un risque de fuite et un coût plus élevé. Or il existe déjà un tel risque de fuite du côté de la borne négative, qui est en cuivre. Il est donc difficile d'accepter un double risque de fuite de l'accumulateur par l'utilisation de joints aux deux extrémités.

Ainsi un des buts de l'invention est de disposer d'un accumulateur électrochimique étanche de forte capacité, dont l'enveloppe est pratiquement cylindrique, possédant deux bornes de sortie aux deux extrémités de l'enveloppe pratiquement cylindrique, l'une des borne de sortie comportant un dispositif de reprise du courant en aluminium compact, fiable et efficace au cours de la durée de vie de l'accumulateur.

La présente invention concerne un accumulateur électrochimique étanche, de capacité supérieure à 10 Ah, comportant une enveloppe pratiquement cylindrique, un faisceau électrochimique, deux extrémités opposées assurant chacune la sortie de courant de polarité opposée, l'une des extrémités comprenant de l'aluminium, ledit accumulateur étant caractérisé en ce que :
- ladite extrémité comprend un couvercle en aluminium, le couvercle en aluminium étant susceptible d'être mis en contact électrique avec une pièce de connexion électrique extérieure à l'accumulateur, par un moyen de serrage, situé au moins en partie du côté dudit couvercle intérieur à l'accumulateur et coopérant avec un moyen d'assemblage extérieur à l'accumulateur, ledit moyen de serrage étant en matériau choisi parmi les aciers inoxydables, les aciers nickelés, le cuivre et le laiton, et
- l'étanchéité dudit accumulateur au niveau du couvercle étant assurée par un opercule métallique d'étanchéité, situé du côté du couvercle intérieur à l'accumulateur.

L'utilisation du matériau choisi pour le moyen de serrage permet avantageusement de pouvoir utiliser un couple de serrage important pour le montage de ladite extrémité de l'accumulateur et pour la réalisation d'une liaison avec une pièce de connexion électrique extérieure.

Selon un mode de réalisation, l'enveloppe de l'accumulateur est en aluminium. L'avantage par rapport à l'utilisation d'acier inoxydable de l'art antérieur est une capacité massique améliorée. Un autre avantage est aussi une étanchéité améliorée par rapport à l'art antérieur car il n'y a alors pas besoin de joint du côté de l'extrémité de l'accumulateur comprenant le couvercle en aluminium, pour éviter les problèmes de corrosion électrochimique.

Selon un mode de réalisation, l'accumulateur selon l'invention est tel que le moyen de serrage comprend un filetage. Avantageusement ceci permet d'assurer une liaison par vissage avec une pièce de connexion extérieure de grande fiabilité et de grande stabilité, particulièrement dans le cas de grandes capacités. Selon une première variante, le moyen de serrage comprend une partie prenant appui sur la face dudit couvercle intérieure à l'accumulateur et présentant un filetage. Par exemple, le moyen de serrage est un écrou, ou bien le moyen de serrage est un goujon. Selon une deuxième variante, le moyen de serrage est une douille.

De préférence, le moyen de serrage est associé à un dispositif anti-rotation. Ceci permet de faciliter le montage de l'accumulateur.

Selon un mode de réalisation, le couvercle comprend des ouvertures aptes à permettre la sortie de tout gaz issu de l'accumulateur.

Selon une variante, l'opercule métallique d'étanchéité comporte au moins un affaiblissement de sécurité apte à se rompre en cas d'augmentation de pression interne de l'accumulateur jusqu'à une valeur de la pression interne supérieure ou égale à une pression P1.

Selon un mode de réalisation préférentiel, ledit opercule métallique d'étanchéité est appliqué contre ledit moyen de serrage ; ce dernier peut alors être apte à empêcher, lors d'une augmentation de pression interne de l'accumulateur jusqu'à une valeur de la pression interne supérieure ou égale à la pression P1, la déformation d'une partie, qui est de préférence une partie centrale, dudit opercule métallique. Une telle réalisation présente l'avantage d'aider à ce que la déchirure de l'affaiblissement de sécurité dudit opercule métallique se fasse nettement à la valeur désirée, en en diminuant la marge d'erreur.

Selon un autre mode de réalisation, l'accumulateur selon l'invention comporte un interrupteur comprenant un capteur, installé par une ouverture du couvercle dans un logement, et tel que le capteur est situé en face dudit opercule métallique, l'interrupteur comportant en outre deux bornes pour assurer la liaison électrique avec un dispositif électronique de type coupe-circuit apte à couper le passage du courant dans l'accumulateur lors d'une déformation dudit opercule métallique due à une augmentation de pression interne de l'accumulateur jusqu'à une valeur de la pression interne supérieure ou égale à une pression P2, la pression P2 étant inférieure ou égale à la pression P1. Ceci présente un avantage en terme de sécurité, en permettant avant le déclenchement du dispositif de sécurité qu'est l'affaiblissement de sécurité dudit opercule métallique d'étanchéité, de couper la source de dysfonctionnement au plus tôt. De préférence, une portion dudit opercule métallique d'étanchéité est alors apte à se retourner sous l'effet de l'augmentation de pression interne de l'accumulateur jusqu'à une valeur de la pression supérieure ou égale à la pression P2, de façon à être en contact électrique avec l'interrupteur. Le contact se fait alors franchement.

L'invention concerne plus particulièrement les accumulateurs électrochimiques étanches de couple électrochimique fonctionnant en présence d'un électrolyte non-aqueux tel que le couple lithium-ion. De tels accumulateurs sont généralement utilisés pour l'alimentation des véhicules électriques ou hybrides.

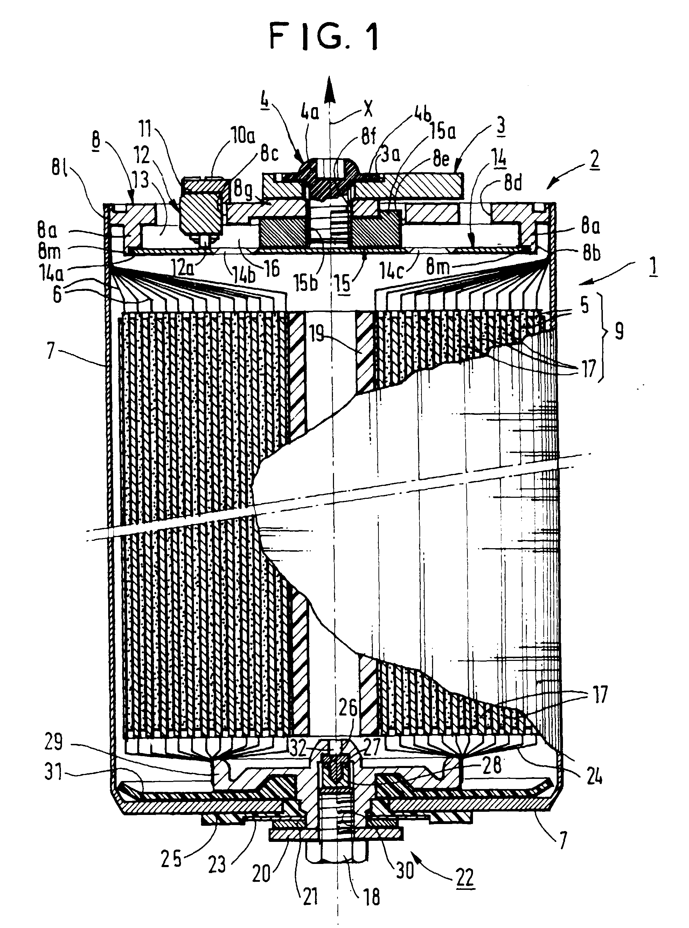

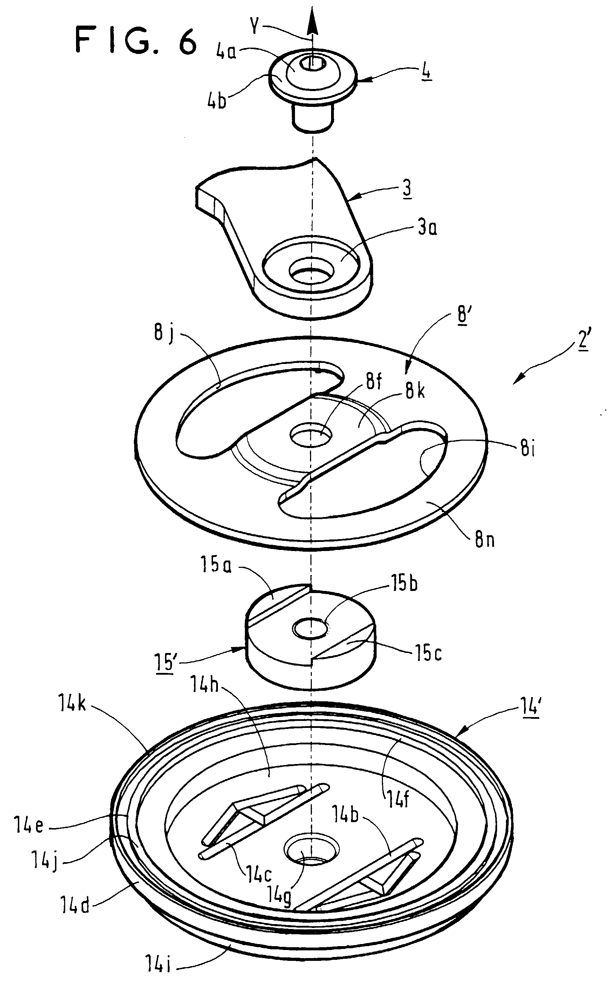

L'invention sera mieux comprise et d'autres caractéristiques et avantages apparaîtront à la lecture de la description qui va suivre, donnée à titre non limitatif, par référence aux figures 1 à 8. Les mêmes numéros de référence s'appliquent aux pièces ou aux parties de pièces identiques sur toutes les figures.

La figure 1 représente une vue schématique en coupe longitudinale (voir figure 2 ligne I - I) d'un accumulateur selon une des variantes de l'invention, dans laquelle le moyen de serrage est un écrou.

La figure 2 représente une vue schématique du dessus des pièces de la figure 1.

La figure 3 représente une vue schématique en perspective éclatée des pièces de l'extrémité positive de l'accumulateur des figures 1 et 2, ainsi que de l'interrupteur et des pièces de connexion extérieures à l'accumulateur.

La figure 4 représente une vue schématique en coupe longitudinale partielle (voir figure 5 ligne IV - IV) d'une extrémité positive d'un accumulateur, selon une autre des variantes de l'invention, dans laquelle le moyen de serrage est un écrou.

La figure 5 représente une vue schématique du dessus des pièces de la figure 4.

La figure 6 représente une vue schématique en perspective éclatée des pièces de l'extrémité positive de l'accumulateur des figures 4 et 5, ainsi que des pièces de connexion extérieures à l'accumulateur.

La figure 7 représente une vue schématique partielle en coupe longitudinale (voir figure 2 ligne I - I) d'une extrémité positive selon une autre variante de l'invention.

La figure 8 représente une vue schématique partielle en coupe longitudinale d'une extrémité positive selon une autre variante de l'invention.

L'accumulateur 1 représenté dans les figures 1 à 3 est un accumulateur étanche de type lithium-ion. Il est de capacité de 30 à 50 Ah et il est utilisé pour l'alimentation de véhicules électriques ou hybrides. Il comprend une enveloppe qui est un godet 7 pratiquement cylindrique fermé par un couvercle 8. A une extrémité 22, l'accumulateur 1 est muni d'une sortie négative de courant. A une autre extrémité 2, l'accumulateur 1 est muni d'une sortie positive de courant. L'accumulateur 1 comprend un faisceau électrochimique 9 comprenant au moins une alternance d'électrode(s) positive(s) 5, d'électrode(s) négative(s) 17 et de séparateur (non représenté), généralement enroulée en spirale selon un axe X autour d'un mandrin central 19 et insérée dans le godet 7, rempli d'électrolyte. Le mandrin 19 est en matière isolante. Selon une variante non représentée, le mandrin 19 est isolé des électrodes 5 et 17, par exemple par un matériau du type du séparateur, sans être lui-même de nature isolante.

L'extrémité de l'accumulateur 1 dans laquelle est placée la borne négative 22 comprend une partie du godet 7. La borne négative 22, qui est généralement composée de pièces en métal tel que le cuivre, est isolée du godet 7 par un joint supérieur 25 et un joint inférieur 31. Une pluralité de lamelles 24 qui sont en connexion avec l'électrode négative 17 sont soudées sur une pièce de connexion 29. La pièce de connexion 29 est en contact avec une vis 18 qui bloque un écrou 20, une rondelle élastique 21 et une rondelle plane 23. Un logement fileté 30 au centre de la pièce 29 permet un accès à un trou 32 de remplissage en électrolyte, ledit accès étant fermé par une vis 26 sur laquelle vient se loger un joint 27 puis un écrou 28 vissé dans le logement 30. Pour la connexion électrique avec l'extérieur de l'accumulateur 1, il suffit alors de loger la vis 18 dans la partie externe du logement 30, et de venir par tout moyen adéquat collecter le courant au niveau de la vis 18.

La polarité de l'extrémité positive 2 est la même que celle du godet 7, et que celle de l'électrode 5, soudée au godet 7 par l'intermédiaire d'une pluralité de lamelles de connexion 6. Le couvercle 8 comporte une face périphérique extérieure 81 par laquelle il est soudé au godet 7. Le courant passe de l'électrode 5 via les lamelles 6 au godet 7, puis au couvercle 8 et à l'opercule 14, la reprise de courant avec la pièce 3 se faisant par le contact serré avec le couvercle 8. L'étanchéité de l'extrémité 2 de l'accumulateur 1 est assurée par la pièce 14, la pièce 14 étant soudée à la pièce 8 elle-même soudée au godet 7.

Selon une variante, il est aussi possible de connecter l'électrode 5, par l'intermédiaire des lamelles 6, à la partie protubérante 8a du couvercle 8, et plus particulièrement sur une face périphérique extérieure 8b de ladite protubérance 8a. A cet effet il est possible que la face périphérique extérieure 8b comporte une partie circulaire légèrement protubérante pour faciliter la connexion.

Un opercule métallique d'étanchéité 14, comportant des affaiblissements de sécurité 14b et 14c, est fixé par soudure d'une face périphérique extérieure 14a sur une face interne 8m d'une partie protubérante 8a du couvercle 8, située à l'intérieur de l'accumulateur 1 et en périphérie du couvercle 8. Les pièces 8, 7 et 14 sont en aluminium.

L'opercule 14 est une pièce emboutie, ce qui avantageusement simplifie la fabrication d'une telle pièce et surtout en diminue notablement le coût par rapport à une pièce usinée.

Selon l'invention, une pièce de connexion électrique 3 extérieure à l'accumulateur 1 est fixée sur le couvercle 8 de l'extrémité 2, les deux pièces 8 et 3 étant maintenues solidaires par un moyen de serrage formé par un écrou 15 en acier nickelé s'appuyant sur la face interne du couvercle 8 et coopérant une vis 4, extérieure à l'accumulateur 1. La vis 4 comprend une tête 4a et une couronne 4b qui vient s'insérer dans un logement 3a prévu à cet effet dans la pièce 3. Le couvercle 8 comporte aussi une ouverture 8f, filetée, qui permet d'y loger une partie de la vis 4. Selon une variante, le couvercle 8 ne comprend pas de filetage. En effet, le serrage assuré par le moyen de serrage qu'est l'écrou 15 coopérant avec la vis 4 est le plus souvent suffisant pour assurer la connexion électrique du couvercle 8 avec la pièce 3.

L'écrou 15 a une fonction anti-rotation, étant par l'intermédiaire d'une partie protubérante 15a bloqué dans un logement 8e du couvercle 8. Le couvercle 8 présente une partie légèrement saillante 8g du côté opposé à l'opercule 14. La vis 4 bloque l'écrou 15 par serrage au niveau d'un filetage 15b.

L'écrou 15 et l'opercule métallique d'étanchéité 14 ne sont pas en contact direct : il existe un jeu entre les deux pièces, qui permet avantageusement de ne pas forcer sur l'opercule 14 lors de la fabrication et de l'utilisation normale de l'accumulateur 1.

Le fait que le matériau constituant l'écrou soit en acier nickelé et que les autres pièces principales 14, 8 et 7 de l'extrémité 2 sont en aluminium confère plusieurs avantages à l'accumulateur 1 selon l'invention. D'une part la résistance au serrage de l'extrémité positive 2 est très forte, lors de l'assemblage de ladite extrémité 2 avec la pièce de connexion électrique 3, ce qui implique une meilleure efficacité dudit serrage et une meilleure résistance à l'écrasement. D'autre part, la résistance à l'augmentation de la pression interne dans l'accumulateur 1 est améliorée, et donc l'accumulateur 1 possède une meilleure résistance mécanique à une éventuelle déformation due à une augmentation de pression interne. Des pièces 8 et 14, c'est la pièce 8 qui de par son épaisseur par rapport à l'épaisseur de la pièce 14 supporte l'essentiel des efforts mécaniques supportés par l'extrémité 2, grâce à la présence de l'écrou 15.

Le couvercle 8 comprend des ouvertures 8c et 8d destinées à laisser échapper tout gaz sortant de l'accumulateur 1 par les affaiblissements 14b et 14c, dans le cas d'une augmentation de la pression interne, au-dessus d'une pression calibrée égale à P1, qui conduit à l'ouverture desdits affaiblissements 14b et 14c dans un logement 16 créé entres les pièces 8 et 14 et maintenu par la présence de l'écrou 15. La pression P1 est typiquement comprise entre 10 et 15.10⁵ Pa.

Un interrupteur électronique 12, muni d'un capteur 12a, est logé dans une partie 13 du logement 16 à travers l'ouverture 8c du couvercle 8. Le capteur de pression 12a, sous forme de bouton poussoir, vient en face de l'opercule 14, pour capter toute déformation de l'opercule 14 due à une augmentation de pression, au-dessus d'une pression calibrée pratiquement égale à P2. La pression P2 est typiquement comprise 8 et 10.10⁵ Pa. De façon préférée la pression P2 est légèrement inférieure ou pratiquement égale à la pression P1, par exemple la pression P2 est de l'ordre de 8.10⁵ Pa et la pression P1 est de l'ordre de 10.10⁵ Pa.

Dans le cas de la fabrication et du fonctionnement normal de l'accumulateur 1, les pièces 12a et 14 ne sont pas en contact, un jeu séparant les deux pièces. L'interrupteur 12 est maintenu contre une pièce 11 de soutien par collage. Selon une variante, le capteur 12a est remplacé par un capteur en tension, avec les connexions appropriées.

Selon une autre variante non représentée, indépendante ou non de la variante précédente, l'opercule 14 comprend une partie pratiquement concave en regard du capteur 12a, qui, sous l'effet d'une augmentation de pression jusqu'à une valeur de la pression supérieure ou égale à P2, se retourne, prenant une forme convexe par rapport au capteur 12a, et vient franchement en contact avec ledit capteur 12a.

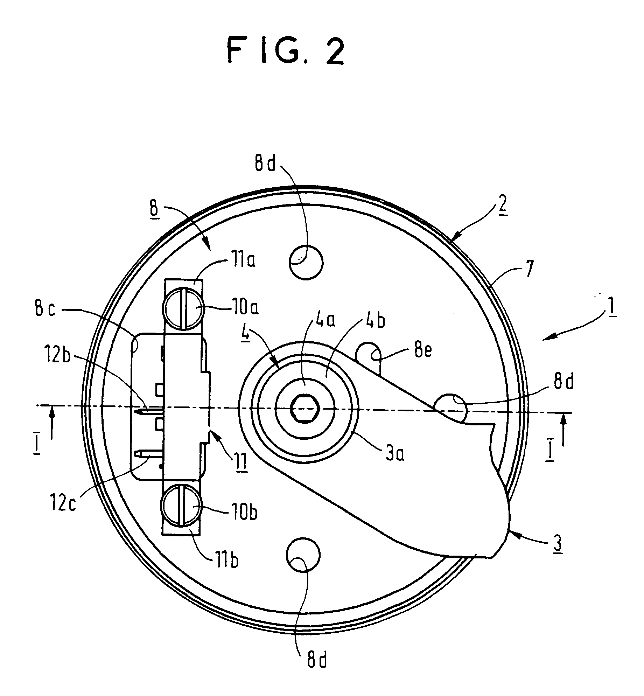

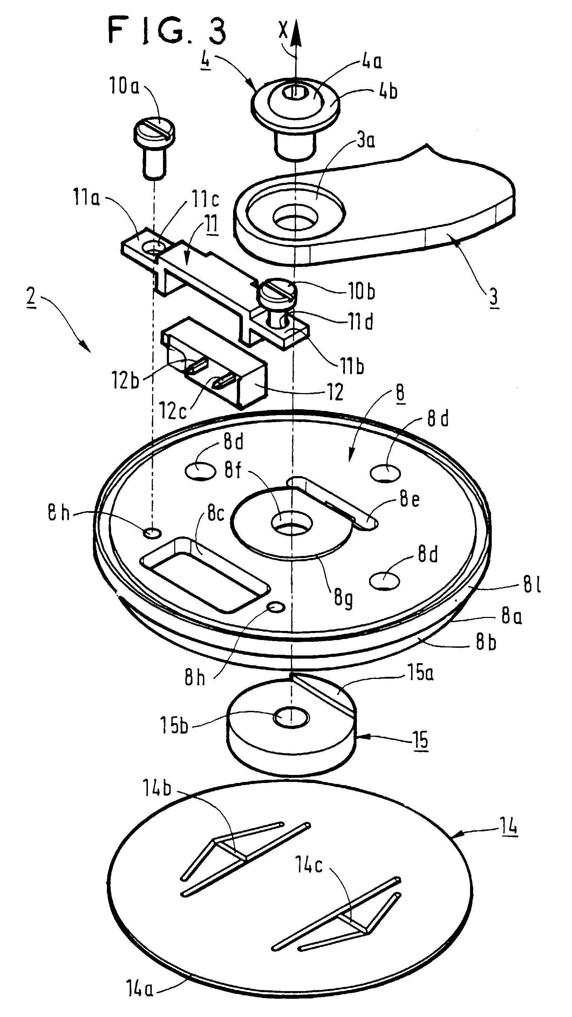

L'interrupteur 12 est relié par l'intermédiaire de fils électriques (non représentés) à un dispositif électronique extérieur (non représenté) qui permet de couper le courant lors de l'augmentation de pression interne jusqu'à une valeur de la pression supérieure ou égale à P2. Les fils sont soudés aux bornes 12b et 12c de l'interrupteur 12 (non visibles sur la figure 1, voir figures 2 et 3). Lorsque la pression interne de l'accumulateur prend une valeur supérieure ou égale à la pression P2, le contact se fait entre le capteur 12a et l'opercule 14, comme explicité ci avant, donnant une information électrique à un circuit électronique en liaison avec les bornes 12b et 12c de l'interrupteur 12. Par exemple le contact qui se fait crée un court-circuit entre les bornes 12b et 12c de l'interrupteur 12. Ainsi il est possible par un dispositif électrique extérieur à l'accumulateur 1 de venir couper l'alimentation de l'accumulateur 1 en courant, de façon à stopper au moins partiellement la montée en pression interne de l'accumulateur 1.

L'interrupteur 12 peut être un interrupteur du commerce, auquel cas il peut éventuellement comporter d'autres éléments non directement utilisables pour la présente utilisation, ou un interrupteur construit sur-mesure pour ladite utilisation. Selon une variante, l'interrupteur 12 peut comporter tout autre moyen de maintien en regard et à proximité de l'opercule 14.

Mais il peut arriver que la montée en pression ne soit pas stoppée brutalement, et/ou que l'électronique de gestion de l'accumulateur 1 soit défaillante, auquel cas l'utilisateur se trouve en danger lors d'une montée en pression interne de l'accumulateur 1. C'est pourquoi, lorsqu'une telle montée en pression interne est supérieure à la pression P1, l'extrémité positive 2 est telle que les affaiblissements 14b et 14c vont s'ouvrir à l'intérieur du logement 16. Cette ouverture des affaiblissements 14b et 14c permet à tout gaz de s'échapper par les ouvertures 8d et 8c du couvercle 8. Grâce à la présence de l'écrou en acier nickelé 15, ainsi que grâce à l'inertie du couvercle 8, l'ouverture des affaiblissements 14b et 14c s'effectue de façon contrôlée. Ainsi le couvercle 8 ne subit pratiquement pas de déplacement.

Le couvercle 8, associé au moyen de serrage 15 coopérant avec la vis 4, permet de rigidifier l'extrémité positive 2 et pratiquement de supprimer tout déplacement notable de pièce avant l'ouverture des affaiblissements 14b et 14c due au gonflement créé par l'augmentation de pression interne de l'accumulateur 1. Par ailleurs il faut noter que l'ouverture des affaiblissements 14b et 14c ne crée pas a priori de rupture de circuit électrique entre l'accumulateur 1 et la pièce de connexion électrique extérieure 3 via le couvercle 8, l'alimentation électrique dudit accumulateur 1 étant typiquement assurée par une gestion électronique extérieure à l'accumulateur 1, indépendante ou non de l'extrémité 2.

L'assemblage de l'accumulateur 1 est réalisé par enroulement de l'alternance d'électrodes 5, 17 et de séparateur autour du mandrin 19 selon l'axe X, constituant ainsi le faisceau 9, puis maintien dudit faisceau 9 et soudure des lamelles 24 sur la pièce 29, et ensuite insertion du joint inférieur 31 et du faisceau 9 dans le godet 7. Alors est mis en place le joint supérieur 25. D'autre part, on réalise l'extrémité positive 2 par le montage, tel qu'il apparaît dans la figure 3. Un tel montage se fait par emboîtements successifs des pièces 14, 15, 8 et 3, puis insertion de l'ensemble dans le godet 7. Ensuite des soudures étanches sont réalisées entre les pièces 14 et 8, ainsi qu'entre les pièces 8 et 7. La soudure des lamelles 6 se fait au godet 7 avant d'insérer l'extrémité positive 2 dans le godet 7. Selon une variante, si les lamelles 6 sont soudées au couvercle 8, la soudure se fait en approchant l'extrémité positive 2 déjà préalablement assemblée, puis en venant souder l'extrémité positive 2 au godet 7 via le couvercle 8.

Ensuite il reste à introduire l'électrolyte par le trou 32, puis on colmate de façon étanche ce trou 32 par la vis 26, bloquée en rotation, le joint 27 et l'écrou 28. Enfin on procède à la mise en place de la vis 18, bloquant la rondelle plane 25, la rondelle élastique 21 et l'écrou 20, réalisant ainsi la borne négative 22. Pour finir, on réalise la connexion avec la pièce de connexion 3, extérieure à l'accumulateur, en venant fixer celle-ci sur le couvercle 8 par serrage de la vis 4 par les filetages 15b de l'écrou 15 et 8f du couvercle 8.

L'interrupteur 12 est fixé sur le couvercle 8 par l'intermédiaire de deux vis 10a et 1Ob, fixées respectivement sur des pattes 11a et 11b de la pièce 11 comportant respectivement des logements filetés 11c et 11d prévus à cet effet. Les vis 1Oa et 10b assurent ainsi la liaison entre la pièce 11 et le couvercle 8, où deux ouvertures filetées 8h (non visibles sur la figure 2 mais présentes sur la figure 3) sont prévues pour recevoir lesdites vis 10a et 10b.

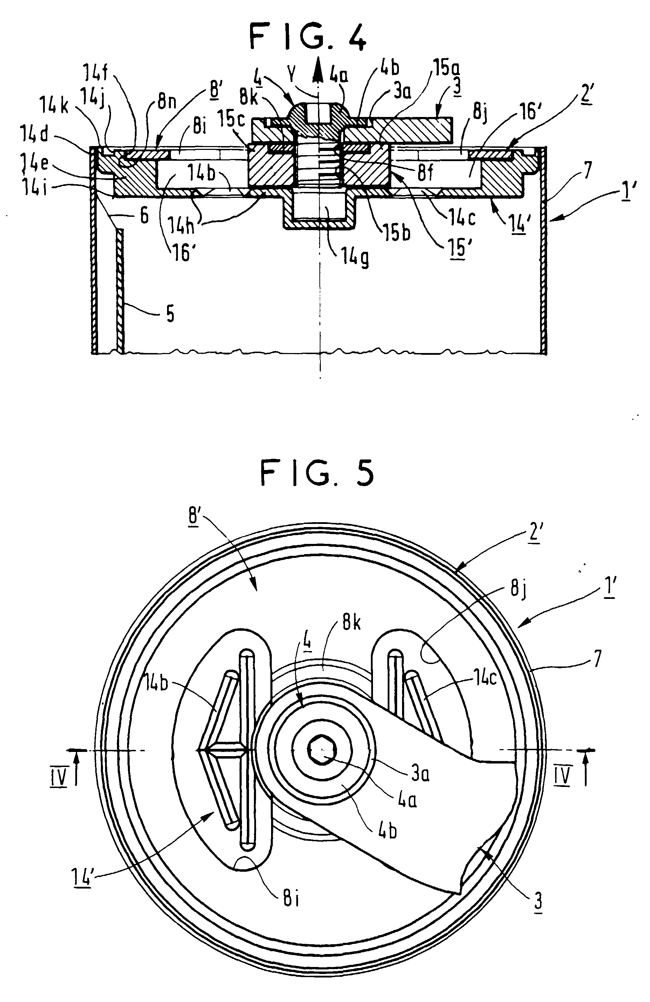

L'accumulateur 1' représenté dans les figures 4, 5 et 6 est semblable à l'accumulateur des figures 1 à 3 à l'exception de l'extrémité positive 2 qui est ici une extrémité positive 2' correspondant à une autre des variantes de l'invention. Nous avons ici seulement représenté partiellement le godet 7 pratiquement cylindrique d'axe Y et une électrode positive 5, cette dernière étant représentée de façon très schématique. L'extrémité négative 22 n'a pas été représentée.

L'accumulateur 1' comporte un opercule métallique d'étanchéité 14' et un couvercle 8'. Une pièce de connexion électrique 3 extérieure à l'accumulateur 1' se loge sur le couvercle 8' de l'extrémité positive 2', les deux pièces 8' et 3 étant maintenues solidaires par un moyen de serrage qui est un écrou 15', coopérant avec une vis 4, extérieure à l'accumulateur 1'. L'opercule 14' est constitué d'une partie centrale 14h et d'une partie périphérique 14e. L'étanchéité de l'accumulateur 1' est assurée par la pièce 14', soudée au godet 7.

La polarité de l'extrémité positive 2' est la même que celle du godet 7, et que celle de l'électrode 5, soudée au godet 7 par l'intermédiaire d'une pluralité de lamelles de connexion 6. Le couvercle 8' comporte une face périphérique extérieure 8n par laquelle il est soudé à une face périphérique interne 14f d'une partie saillante 14j de la partie périphérique 14e de l'opercule 14'. L'opercule 14', comportant des affaiblissements de sécurité 14b et 14c, est fixé par soudure, sur le godet 7, d'une face périphérique externe 14d d'une partie saillante 14k située sur la partie périphérique 14e de l'opercule 14'. Les pièces 8', 7 et 14' sont en aluminium. Selon une variante, il est aussi possible de connecter l'électrode 5, par l'intermédiaire des lamelles 6, à la partie centrale 14h de l'opercule 14', située à l'intérieur de l'accumulateur 1', et plus particulièrement sur la face périphérique extérieure 14i de ladite partie centrale 14h.

Entre l'opercule 14' et le couvercle 8' se situe un écrou en acier nickelé 15', qui représente le moyen de serrage selon l'invention coopérant avec le moyen d'assemblage qu'est la vis 4. L'écrou 15' a une fonction anti-rotation, étant par l'intermédiaire de deux parties protubérantes 15a et 15c bloqué respectivement dans les logements 8j et 8i du couvercle 8'. Le couvercle 8' présente une partie légèrement saillante 8k du côté opposé à l'opercule 14'. La vis 4 bloque l'écrou 15' par serrage au niveau d'un filetage 15b. L'écrou 15 et l'opercule 14' ne sont pas en contact direct : il existe un jeu entre les deux pièces. Les avantages du matériau constituant l'écrou 15', l'acier nickelé, sont les mêmes que ceux explicités précédemment pour l'écrou 15 de l'accumulateur 1.

Le couvercle 8' comprend les deux logements 8i et 8j, destinés à laisser échapper tout gaz sortant de l'accumulateur 1' respectivement par les affaiblissements 14b et 14c, dans le cas d'une augmentation de la pression interne au-dessus d'une pression calibrée égale à P1, qui conduit à l'ouverture desdits affaiblissements 14b et 14c. La pression P1 est du même ordre de grandeur que celle donnée pour l'accumulateur 1 des figures 1 à 3. Le couvercle 8' comporte aussi une ouverture 8f, filetée, qui permet d'y loger une partie de la vis 4.

L'opercule 14' comporte de plus un logement 14g destiné à faciliter le serrage de la vis 4, et surtout qui permet avantageusement de ne pas forcer sur l'opercule 14' lors de la fabrication de l'accumulateur 1'.

Le fonctionnement de l'extrémité positive 2' représentée sur les figures 4, 5 et 6 est pratiquement identique au fonctionnement de l'extrémité positive 2 représentée sur les figures 1, 2 et 3. Lorsqu'une montée en pression interne est supérieure ou égale à la pression P1, l'extrémité positive 2' est telle que les affaiblissements 14b et 14c vont s'ouvrir à l'intérieur d'un logement 16', créé entre les pièces 14' et 8' et maintenu par la présence de l'écrou 15'. Cette ouverture permet à tout gaz de s'échapper par les logements 8i et 8j du couvercle 8', ce qui assure une meilleure protection de l'utilisateur. Grâce à la présence de l'écrou en acier nickelé 15, ainsi que grâce à l'inertie du couvercle 8', l'ouverture des affaiblissements 14b et 14c s'effectue de façon contrôlée. Ainsi le couvercle 8' ne subit pratiquement pas de déplacement. La présence du couvercle 8' permet de rigidifier la borne positive 2' et de supprimer tout déplacement notable de pièce avant l'ouverture des affaiblissements due au gonflement créé par l'augmentation de pression interne de l'accumulateur 1'. A la différence du cas de l'accumulateur 1, dans le cas de l'accumulateur 1', c'est la pièce 14' qui de par son épaisseur par rapport à l'épaisseur de la pièce 8' supporte l'essentiel des efforts mécaniques supportés par l'extrémité 2', grâce à la présence de l'écrou 15. Par rapport à l'accumulateur 1 des figures 1 à 3, le montage de l'accumulateur 1' nécessite une soudure de plus, ce qui rend plus coûteux et un peu plus compliqué le montage de l'accumulateur 1' par rapport au montage de l'accumulateur 1. Par contre l'opercule 14' est plus facilement usiné que l'opercule 14.

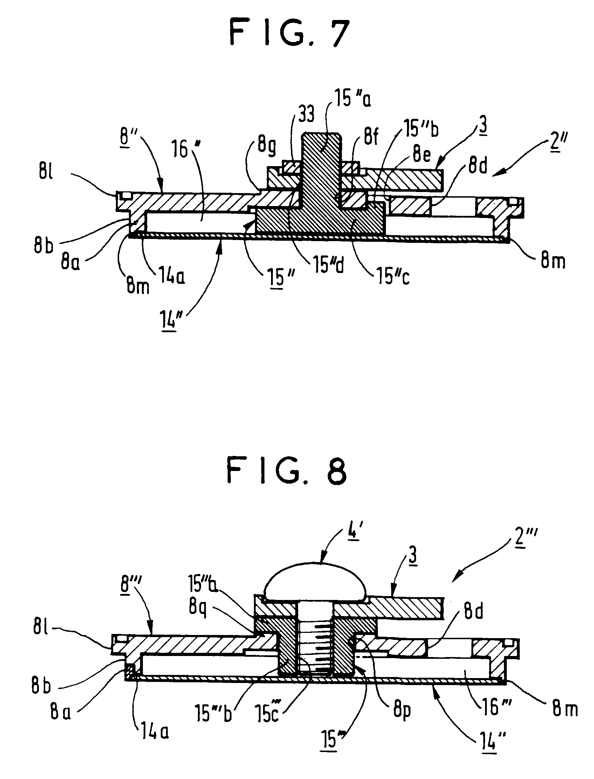

La figure 7 représente une vue schématique partielle en coupe longitudinale (voir figure 2 ligne I - I) d'une extrémité positive proche de celle que représentée sur la figure 1, aux différences que
- il n'existe pas d'ouverture 8c dans le couvercle qui devient ainsi le couvercle 8", que
- l'opercule 14 est un opercule métallique d'étanchéité 14" ne comportant pas d'affaiblissement de sécurité, et que
- le moyen de serrage est un goujon 15" et non plus un écrou 15.

Le goujon 15" comprend une partie centrale proéminente 15"a, filetée par un filetage 15"d. La partie centrale 15"a traverse le couvercle 8". Le goujon 15" comprend aussi une partie 15"c qui s'appuie contre la face interne du couvercle 8", ainsi qu'une partie protubérante anti-rotation 15"b. Le goujon 15" est une pièce usinée.

Le couvercle 8" comporte trois ouvertures 8d, une face périphérique extérieure 81, une partie protubérante 8a, de face périphérique extérieure 8b, une partie légèrement protubérante 8g, une ouverture 8f, filetée, qui permet de fixer la partie 15"a du goujon 15", et une partie de face interne 8m qui est soudée avec la partie périphérique 14a de 14". Un logement 16" est créé entre les pièces 8" et 14". Le couvercle 8" comporte aussi un logement 8e de calage de la partie protubérante anti-rotation 15"b. La connexion avec une pièce de connexion extérieure 3 se réalise, après insertion de la pièce 3 dans la partie 15"a, par fixation des pièces 15" et 3 ensemble, grâce au serrage d'un écrou de serrage 33 sur le filetage 15"d.

La figure 8 représente une vue schématique partielle en coupe longitudinale d'une borne positive de sortie de courant telle que représentée sur la figure 7, aux différences que :
- le moyen de serrage est une douille 15"' et non plus un goujon 15", et que :
- l'ouverture centrale du couvercle est adaptée à la douille 15"', le couvercle devenant le couvercle 8"'.

La douille 15"' est une pièce cylindrique engagée à force dans le couvercle 8. Elle comporte un logement cylindrique intérieur fileté 15"'c, et une partie supérieure 15"'a sur laquelle vient s'appuyer la pièce de connexion 3. La douille 15"' est une pièce usinée, qui peut être usinée spécialement ou achetée sur catalogue.

Le couvercle 8"' comporte trois ouvertures 8d, une face périphérique extérieure 81, une partie protubérante 8a, de face périphérique extérieure 8b, une partie légèrement protubérante 8q, une ouverture 8p, qui permet de monter en force la partie principale 15"'b de la douille 15"', et une partie de face interne 8m qui est soudée avec la partie périphérique 14a de 14". Un logement 16"'est créé entre les pièces 8"' et 14". Le montage en force de la partie 15"b dans l'ouverture 8p réalise l'anti-rotation de la douille 15"'. La connexion avec la pièce de connexion extérieure 3 se réalise par logement de la vis 4 dans le logement cylindrique fileté 15"c.

Bien entendu l'accumulateur selon l'invention ne se limite pas aux représentations décrites ci-dessus.

L'accumulateur selon l'invention peut être utilisé en module d'accumulateurs, typiquement en module de six accumulateurs fonctionnant trois en série et deux en parallèle ou bien fonctionnant deux en série et trois en parallèle, aussi bien qu'en batterie d'au moins un module tel que décrit précédemment, typiquement en batterie de trente modules fonctionnant en série.

## Revendications

1. Accumulateur électrochimique (1, 1') étanche, de capacité supérieure à 10 Ah, comportant une enveloppe (7) pratiquement cylindrique, un faisceau électrochimique (9), deux extrémités (2, 2', 2", 2"' ; 22) opposées assurant chacune la sortie de courant de polarité opposée, l'une des extrémités (2, 2', 2", 2"') comprenant de l'aluminium, ledit accumulateur (1, 1') étant caractérisé en ce que :
• ladite extrémité comprend un couvercle (8, 8', 8", 8"') en aluminium, ledit couvercle (8, 8', 8", 8"') en aluminium étant susceptible d'être mis en contact électrique avec une pièce de connexion électrique (3) extérieure à l'accumulateur (1, 1'), par un moyen de serrage (15, 15', 15", 15"'), situé au moins en partie du côté dudit couvercle (8, 8', 8", 8"') intérieur à l'accumulateur (1, 1') et coopérant avec un moyen d'assemblage (4, 4', 33) extérieur à l'accumulateur (1, 1'), ledit moyen de serrage (15, 15', 15", 15"') étant en matériau choisi parmi les aciers inoxydables, les aciers nickelés, le cuivre et le laiton, et
• l'étanchéité dudit accumulateur (1, 1') au niveau du couvercle (8, 8', 8", 8"') étant assurée par un opercule métallique d'étanchéité (14, 14', 14"), situé du côté du couvercle (8, 8', 8", 8"') intérieur à l'accumulateur (1, 1').

2. Accumulateur (1, 1') selon la revendication 1 tel que l'enveloppe (7) est en aluminium.

3. Accumulateur (1, 1') selon l'une des revendications 1 ou 2 tel que le moyen de serrage (15, 15', 15", 15"') comprend un filetage (15b, 15"d, 15"'c).

4. Accumulateur (1, 1') selon la revendication 3 tel que le moyen de serrage (15, 15', 15") comprend une partie (15"c) prenant appui sur la face dudit couvercle (8, 8', 8") intérieure à l'accumulateur (1, 1') et présentant un filetage (15b, 15"d).

5. Accumulateur (1, 1') selon la revendication 4 tel que le moyen de serrage est un écrou (15, 15') coopérant avec un moyen d'assemblage qui est une vis (4).

6. Accumulateur (1, 1') selon la revendication 4 tel que le moyen de serrage est un goujon (15") coopérant avec un moyen d'assemblage qui est un écrou (33).

7. Accumulateur (1, 1') selon la revendication 3 tel que le moyen de serrage est une douille (15"') coopérant avec un moyen d'assemblage qui est une vis (4').

8. Accumulateur (1, 1') selon l'une des revendications 1 à 7 tel que le moyen de serrage (15, 15', 15", 15"') est associé à un dispositif anti-rotation (15a, 8e ; 15a, 8j, 15c, 8i ; 15""b, 8^{e} ; 15"'b, 8p).

9. Accumulateur (1, 1') selon l'une des revendications 1 à 8 tel que le couvercle (8, 8', 8", 8"') comprend des ouvertures (8c, 8d) aptes à permettre la sortie de tout gaz issu de l'accumulateur (1, 1').

10. Accumulateur (1) selon la revendication 9 tel que ledit opercule métallique d'étanchéité (14, 14') comporte au moins un affaiblissement de sécurité (14b, 14c) apte à se rompre en cas d'augmentation de pression interne de l'accumulateur (1) jusqu'à une valeur de la pression interne supérieure ou égale à une pression P1, pour permettre la sortie de tout gaz issu de l'accumulateur (1).

11. Accumulateur (1) selon la revendication 10 tel que le moyen de serrage (15, 15') est apte à empêcher, lors d'une augmentation de pression interne de l'accumulateur (1) jusqu'à une valeur de la pression interne supérieure ou égale à la pression P1, la déformation d'une partie dudit opercule métallique d'étanchéité (14, 14').

12. Accumulateur (1) selon la revendication 11 tel que ladite partie est la partie centrale dudit opercule métallique d'étanchéité (14, 14').

13. Accumulateur (1) selon l'une des revendications 1 à 12 comportant un interrupteur (12) comprenant un capteur (12a), installé par une ouverture (8c) du couvercle (8) dans un logement (13), et tel que le capteur (12a) est situé en face de l'opercule métallique d'étanchéité (14), l'interrupteur (12) comportant en outre deux bornes (12b, 12c) pour assurer la liaison électrique avec un dispositif électronique de type coupe-circuit apte à couper le passage du courant dans l'accumulateur (1) lors d'une déformation dudit opercule métallique d'étanchéité (14) due à une augmentation de pression interne de l'accumulateur (1) jusqu'à une valeur de la pression interne supérieure ou égale à une pression P2, la pression P2 étant inférieure ou égale à la pression P1.

14. Accumulateur (1) selon la revendication 13 tel qu'une portion dudit opercule métallique d'étanchéité (14) est apte à se retourner sous l'effet de l'augmentation de pression interne de l'accumulateur (1) jusqu'à une valeur de la pression supérieure ou égale à la pression P2, de façon à être en contact électrique avec l'interrupteur (12).
